# EUROPEAN PATENT SPECIFICATION

(11) **EP 3 126 100 B1**
(45) Date of publication and mention of the grant of the patent: **08.06.2022**
(21) Application number: 15772257.0
(22) Date of filing: 01.04.2015
(51) Int. Cl.: G05D 1/02, B25J 9/00, B25J 19/00, B62D 57/024, G09B 5/06, G09B 19/00, G09B 23/00

(54) **COLOR- OR GRAYSCALE-SENSING, MAGNETIC, MOBILE, MARKING ROBOT**
FARB- ODER GRAUSKALAMESSENDER, MAGNETISCHER, MOBILER MARKIERUNGSROBOTER
ROBOT DE MARQUAGE MOBILE, MAGNÉTIQUE À DÉTECTION DE COULEUR OU DE NIVEAUX DE GRIS

(30) Priority: 02.04.2014 US 201461973936 P
(43) Date of publication of application: 08.02.2017
(73) Proprietor: President and Fellows of Harvard College, Cambridge, MA 02138 (US)
(72) Inventor: DUBROVSKY, Zivthan, Cambridge, MA 02138 (US); CHERNEY, Raphael, Cambridge, MA 02138 (US); MOGENSON, Michael, Cambridge, MA 02138 (US); WERFEL, Justin, Cambridge, MA 02138 (US); O'DONNELL, Kathleen, Cambridge, MA 02138 (US); NAGPAL, Radhika, Cambridge, MA 02138 (US); NAPP, Nils, Cambridge, MA 02138 (US)
(74) Representative: Smith, Jeremy Robert
(86) International application number: PCT/US2015/023952
(87) International publication number: WO 2015/153812

(56) References cited:
- WO-A2-2012/150846
- US-A1- 2006 238 156
- US-A1- 2011 046 780
- US-A1- 2013 288 560
- US-B1- 6 367 902
- US-B2- 8 522 905
- US-B2- 8 522 905
- Bruce Land: "Whiteboard eraser robot", You Tube, 10 August 2012 (2012-08-10), page 1, XP054977917, Retrieved from the Internet: URL:https://www.youtube.com/watch?v=DSR4Bm maPEk [retrieved on 2017-11-27]
- MONDADA, F ET AL.: 'The e-puck, a Robot Designed for Education in Engineering'';' PROCEEDINGS OF THE 9TH CONFERENCE ON AUTONOMOUS ROBOT SYSTEMS AND COMPETITIONS, [Online] 2009, XP055229624 Retrieved from the Internet: <URL:http://infoscience.epfl.ch/record/1352 36/files/epuck-robotica2009.pdf>

## Description

### BACKGROUND

The United States has a problem with education in science, technology, engineering, and mathematics, commonly known as "STEM" fields. Jobs in these domains are a primary driver of the modern economy, and an increasing number of jobs in other fields require knowledge of STEM. However, many students are not successfully learning core concepts. According to recent reports:
- 75% of U.S. eighth graders are not proficient in mathematics when they complete eighth grade;
- 79% of twelfth graders do not perform at a proficient level in science; and
- 54% of high school graduates are not ready for college-level math.

Furthermore, there are not enough students studying STEM disciplines to meet the country's needs. Moreover, according to recent reports:
- 38% of students who start with a STEM major do not graduate with one.
- The U.S. may be short as many as 3 million high-skill workers by 2018.

In order to combat this trend and inspire more students to pursue STEM studies, the President's Council of Advisors on Science and Technology has recommended that we "create STEM-related experiences that excite and interest students of all backgrounds". We propose creating engaging learning experiences through the use of a specially designed robot. Robots have been found to be an exciting and motivating tool for students, as such we believe they can also be powerful educational tools. They can help teach problem solving, logic, programming, computational thinking, and much more. By lowering the hurdle of prerequisite technical knowledge, we believe that robots designed for the classroom can lead to unique and stimulating learning experiences for students of all ages.

WO 2012/150846 A2 discloses a wall-climbing and printing method and system.

### SUMMARY

The invention is set out in the independent claim(s).

Magnetic, color or grayscale (e.g., more than two shades of darkness without relying on color *per se*) sensing, mobile, marking robots and methods for interactive marking by a mobile robot are described herein. Various embodiments of the apparatus and methods may include some or all of the elements, features and steps, described below.

Described herein is a robot that can navigate on vertically mounted whiteboards or on other ferromagnetic surfaces using at least two wheels and magnets in the wheels or elsewhere in or coupled with the robot body. The robot includes a robot body that includes a retainer (*e.g.,* an aperture defined in the robot body) and includes an actuator configured to reciprocally displace a shaft in the retainer. The shaft can take the form of a marker (*e.g.,* a dry erase marker) including a marking tip, wherein the retainer is an aperture defined by the robot body and through which the shaft is reciprocated, wherein the shaft fits in the aperture of the robot body and is actuatable by the actuator to reciprocally place the marking tip in contact with the vertically oriented surface and remove the marking tip from contact with the vertically oriented surface or a shaft that includes or is coupled with an eraser wherein the shaft fits in the retainer of the robot body and is actuatable by the actuator to reciprocally place the eraser in contact with the vertically oriented surface and remove the eraser from contact with the vertically oriented surface. The robot can also include an array of color or grayscale sensors on the top surface and/or bottom surface of the robot body, wherein the sensors are configured to detect color patterns or patterns with differing degrees of darkness as the robot is displaced across the vertically oriented surface. A computing device can be in communication with the sensors, the actuator, and the wheels, wherein the computing device includes a processor and computer-readable memory in communication with the processor. The computer-readable memory includes program code for at least one of the following actions: displacing the robot and actuating the actuator in response to and as a function of measurements from the sensors.

In a method for interactive marking by a mobile robot on a vertical surface, a mobile robot that includes a sensor and an actuated marker is displaced across a vertical surface. Features on, in or behind the vertical surface are detected with the sensor. Displacement of the mobile robot and actuation of the actuated marker is controlled in response to the detection of the features.

Users can interact with the robot by wirelessly controlling the device through a smartphone, tablet, or computer and by drawing directly on the whiteboard to change the robot's environment. Though the robot is, therefore, particularly well suited for classroom use, we believe the robot also has strong potential as an educational toy for the home. Parents who have computing devices in their homes and want to provide engaging and educational experiences for their children can purchase the robot for their kids to use at home, enabling children to have fun and learn at home, while the parents invest in a "toy" that will have a longer lifetime than most and provides tangible learning benefits. While the robot is primarily described as moving across a vertical surface (*e.g.,* a vertically mounted whiteboard), the robot can alternatively be operated on a table, floor or other surface oriented horizontally or at other orientations.

### BRIEF DESCRIPTION OF THE DRAWINGS

FIG. 1 is a photographic image of a robot prototype drawing on a whiteboard.
FIG. 2 shows a schematic layout of features in one embodiment of the robot.
FIG. 3 is a perspective view of another embodiment of the robot.
FIG. 4 is a schematic diagram of the robot and control system, showing the communication between components.
FIG. 5 is a snapshot of an example computer tablet programming interface for the robot.
FIG. 6 shows an interface for programming the robot by drawing color patterns on the board, which the robot drives over and scans to determine a sequence of actions to then execute *(e.g.,* to "dance").
FIG. 7 shows a projectile motion simulation, where the robot performs as the projectile, and where users can change the launching power, mass of the projectile, or gravity.
FIG. 8 shows an embodiment of a racing game users can play with multiple robots (controlled by computer-tablet sensors) on a hand-drawn course affected by features (obstacles, "power-ups", *etc*.) drawn on the surface.
FIG. 9 shows a concept sketch for an embodiment where the robot senses information projected on the whiteboard; this can be treated as non-erasable information or (using a camera or other tracker) can change based on the robot's location and actions.
FIG. 10 shows an application where the robot acts as a "robotic ant" on a whiteboard and can forage with multiple robots and simulated pheromone trails.
FIG. 11 shows an application where the robot scans musical notes and plays a corresponding song.
FIG. 12 shows an embodiment where the robot is used as a wireless testing platform through the hacker port to enable other scientific experiments.
FIG. 13 is an exploded view of a magnetic wheel design.
FIG. 14 is a diagram showing magnetic field lines through the wheel of FIG. 13 and through a ferromagnetic surface.
FIGS. 15 and 16 show two different color sensing methods, where the array of photodetectors can be placed close to the detecting surface, or where optics can be used to guide the light to the sensor.
FIG. 17 shows that a linear camera in the robot can be used with a slit (like a pinhole camera) or a lens to sense a larger surface area of a whiteboard. Additionally, one can use an external light source (*e.g.,* a projector, a monitor, *etc*.) that displays different color combinations to communicate with the device.
FIG. 18 is an image of an actuated marker on an embodiment of the robot.
FIG. 19 shows an embodiment of the actuation mechanism that uses a compressive roller, wherein the compressible roller is used to apply pressure and to grip the marker to move it.
FIG. 20 is an image of an embodiment of the eraser accessory. The shaft on the eraser can be mounted the same way the marker is mounted, and the robot can actuate the eraser in the same way as it does the marker.
FIG. 21 is an image of a robot with a customizable case, wherein the top surface of the robot is a magnetic and/or dry erase whiteboard surface.
FIGS. 22 shows a first prototype of the robot, which has permanent erasing pads and which does not have an actuated marker.
FIG. 23 is an illustration of the underside of an embodiment of the robot showing a light and sensor array for detecting color patterns on a surface traversed by the robot.

In the accompanying drawings, like reference characters refer to the same or similar parts throughout the different views; and apostrophes are used to differentiate multiple instances of the same or similar items sharing the same reference numeral. The drawings are not necessarily to scale, emphasis instead being placed upon illustrating particular principles, discussed below.

### DETAILED DESCRIPTION

The foregoing and other features and advantages of various aspects of the invention(s) will be apparent from the following, more-particular description of various concepts and specific embodiments within the broader bounds of the invention(s). Various aspects of the subject matter introduced above and discussed in greater detail below may be implemented in any of numerous ways, as the subject matter is not limited to any particular manner of implementation. Examples of specific implementations and applications are provided primarily for illustrative purposes.

Unless otherwise defined, used or characterized herein, terms that are used herein (including technical and scientific terms) are to be interpreted as having a meaning that is consistent with their accepted meaning in the context of the relevant art and are not to be interpreted in an idealized or overly formal sense unless expressly so defined herein. For example, if a particular composition is referenced, the composition may be substantially, though not perfectly pure, as practical and imperfect realities may apply; *e.g.,* the potential presence of at least trace impurities (*e.g.,* at less than 1 or 2%) can be understood as being within the scope of the description; likewise, if a particular shape is referenced, the shape is intended to include imperfect variations from ideal shapes, *e.g.,* due to manufacturing tolerances. Percentages or concentrations expressed herein can represent either by weight or by volume. Processes, procedures and phenomena described below can occur at ambient pressure (*e.g.,* about 50-120 kPa-for example, about 90-110 kPa) and temperature (*e.g.,* -20 to 50°C-for example, about 10-35°C).

Although the terms, first, second, third, *etc.,* may be used herein to describe various elements, these elements are not to be limited by these terms. These terms are simply used to distinguish one element from another. Thus, a first element, discussed below, could be termed a second element without departing from the teachings of the exemplary embodiments.

Spatially relative terms, such as "above," "below," "left," "right," "in front," "behind," and the like, may be used herein for ease of description to describe the relationship of one element to another element, as illustrated in the figures. It will be understood that the spatially relative terms, as well as the illustrated configurations, are intended to encompass different orientations of the apparatus in use or operation in addition to the orientations described herein and depicted in the figures. For example, if the apparatus in the figures is turned over, elements described as "below" or "beneath" other elements or features would then be oriented "above" the other elements or features. Thus, the exemplary term, "above," may encompass both an orientation of above and below. The apparatus may be otherwise oriented (*e.g.,* rotated 90 degrees or at other orientations) and the spatially relative descriptors used herein interpreted accordingly.

Further still, in this disclosure, when an element is referred to as being "on," "connected to," "coupled to," "in contact with," *etc.,* another element, it may be directly on, connected to, coupled to, or in contact with the other element or intervening elements may be present unless otherwise specified.

The terminology used herein is for the purpose of describing particular embodiments and is not intended to be limiting of exemplary embodiments. As used herein, singular forms, such as "a" and "an," are intended to include the plural forms as well, unless the context indicates otherwise. Additionally, the terms, "includes," "including," "comprises" and "comprising," specify the presence of the stated elements or steps but do not preclude the presence or addition of one or more other elements or steps.

Additionally, the various components identified herein can be provided in an assembled and finished form; or some or all of the components can be packaged together and marketed as a kit with instructions (*e.g.,* in written, video or audio form) for assembly and/or modification by a customer to produce a finished product.

### Environment:

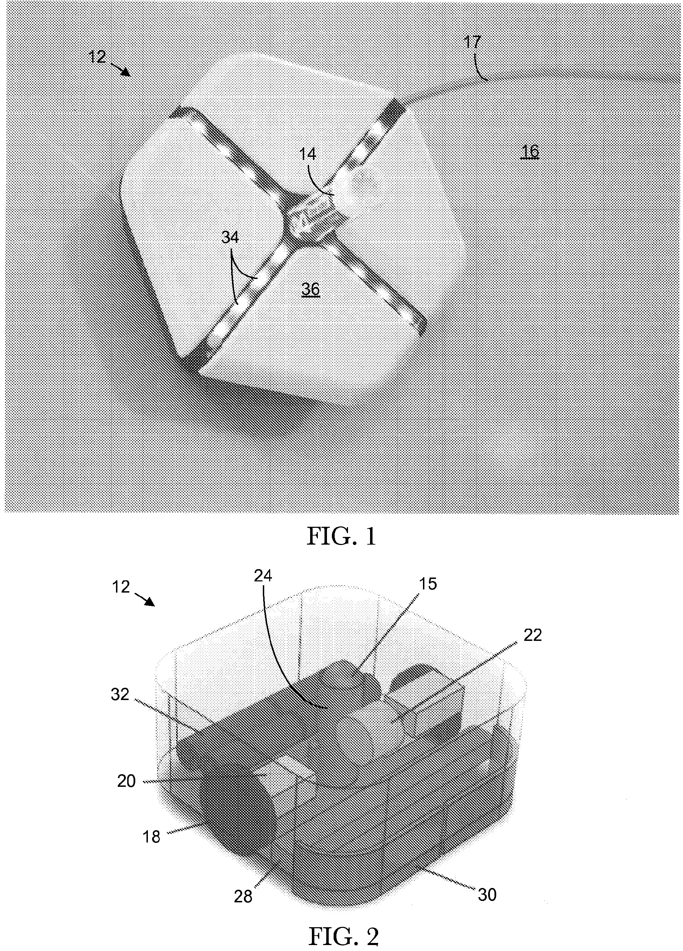

We have developed a mobile robot 12, as shown in FIGS. 1 and 2, for use in classrooms that is able to drive on and modify (through the use of an actuated marker 14 or eraser 15) magnetic whiteboards 16 (while the term, "whiteboard," is used herein, the surface color need not be strictly white, as long as it can be non-permanently be marked). Whiteboards 16 are uniquely well suited for miniature mobile robots for the following reasons:
- users can easily change the environment by drawing or erasing on the surface of the whiteboard 16;
- robots 12 can interact with the user and other robots 12 by changing the environment;
- the whiteboard surface can be mounted vertically to take up minimal space;
- a vertically mounted surface is easier to observe from different locations;
- when mounted vertically, gravity can provide orientation information through a low-cost accelerometer;
- whiteboards 16 are widely available for purchase in a variety of sizes; and
- whiteboards 16 are already installed in a variety of locations, including schools.

While whiteboards 16 provide a specialized and unique environment for the robot 12, the robot 12 can be designed to also work on horizontal, non-magnetic surfaces using the same wheels 18. This flexibility opens up additional environments and use cases for the robot 12. For example, the robot 12 can be used on tables or floors, allowing kids to touch and easily interact with the robot 12.

### Features:

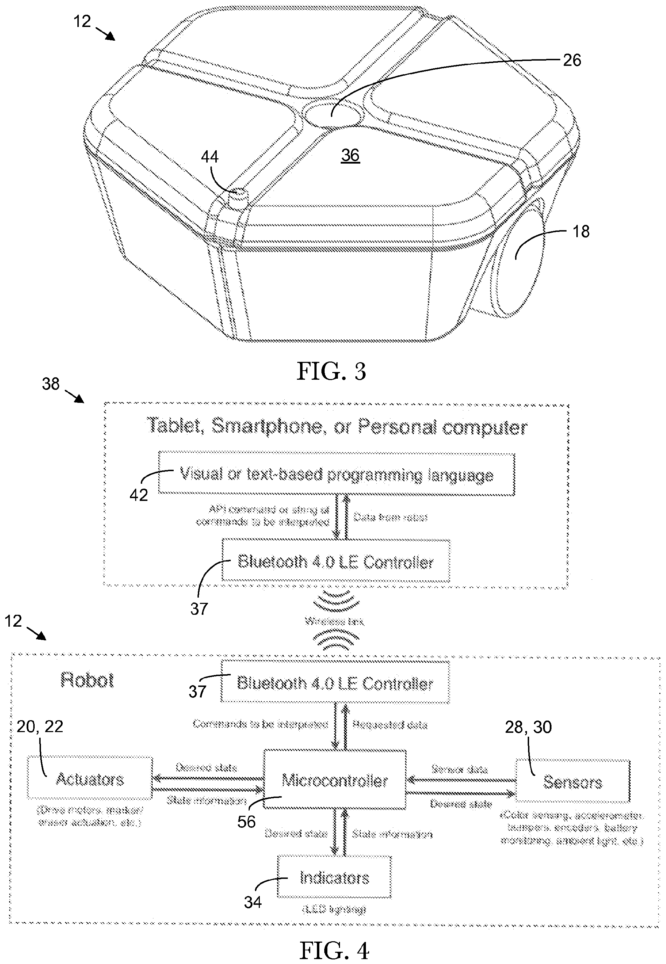

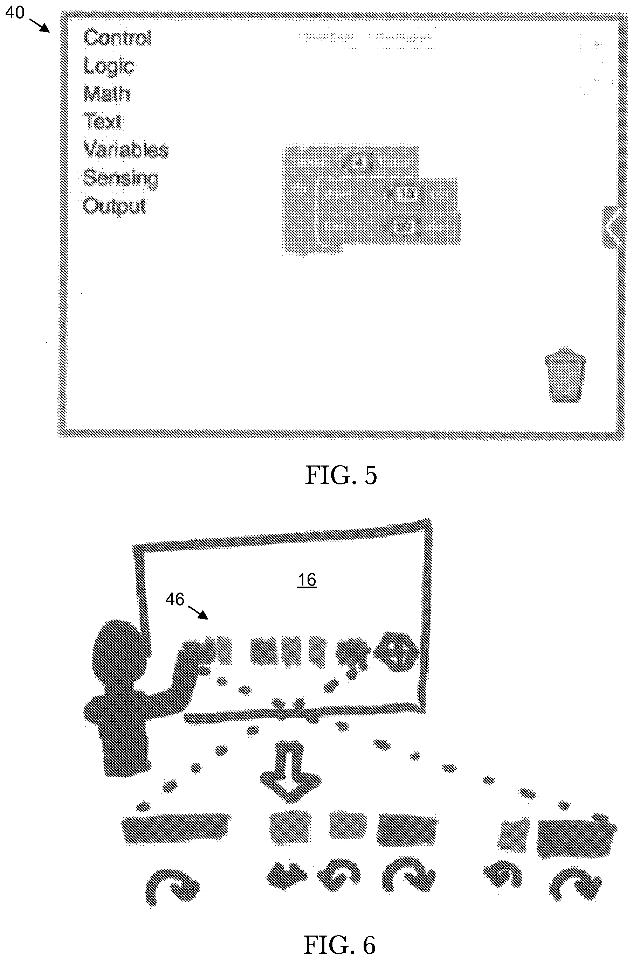

Embodiments of a miniature mobile robot can include the following features:
- a computing device (*e.g.,* a reprogrammable microcontroller) for managing sensors and actuators and executing higher-level functions;
- a Bluetooth 4.0 low-energy wireless link 37 for controlling the robot from an interface 40 (*e.g.,* a graphical user interface, as shown in FIG. 5) on an external device 38, such as a smartphone, tablet, or other computer, as shown in FIG. 4;
- two or more magnetic wheels 18 that attach to ferromagnetic materials with enough force to support the robot and create traction on the wheels (in other embodiments, the magnets may be in or elsewhere coupled with the robot body)
- the ability to drive on horizontal non-magnetic surfaces;
- motors 20 attached to the drive wheels 18 with sufficient torque to drive the robot 12 vertically;
- relative position sensors, such as wheel encoders or optic flow sensors, to estimate location and execute precise position commands;
- force/current sensing of drive motors 20 to sense motor effort and stalling;
- an actuator 22 configured to reciprocally displace a shaft 24 through an aperture 26 (shown in FIG. 3) defined by the robot body;
- a marker 14 mountable for actuation by the actuator 22 in an aperture 26 in the robot body at the center of rotation with force control, wherein the actuator 22 can be configured with a force sensor to determine whether the marker 14 is touching the whiteboard or other drive surface 16;
- a specialized eraser accessory 15 with a marker-sized shaft 24 that also fits in the aperture 26 of the robot body and that is likewise actuatable by the actuator 22 to reciprocally place the eraser 15 in contact with the vertically oriented surface 16 and to remove the eraser 15 from contact with the vertically oriented surface 16;
- the ability to sense whether a marker 14 or eraser accessory 15 is present and to determine color;
- an accelerometer to determine orientation when the robot 12 is on a vertical drive surface 16;
- a gyroscope sensor to measure angular velocity;
- an array of photodetectors 28 on the bottom and/or top of the robot body and configured to sense colors or grayscale patterns drawn on the drive surface 16 (and act as a cliff detector) and/or to detect colors or grayscale images projected onto the robot 12 and onto the drive surface 16;
- a light mounted on the bottom surface of the robot body and configured to generate light that reflects off the drive surface for recording by the photodetector array 28;
- left and right front bumpers 30 to sense the edge of the drive surface 16;
- replaceable batteries 32 (e.g., rechargeable or alkaline);
- colorful LED lighting 34;
- battery level monitoring;
- exposed pins for expansion and reprogramming (*i.e.,* a "hacker port")
- a magnetic, dry-erase top 36 for customization;
- conductive contacts for electrically coupling with a charging station (drive on charging); and
- support for a variety of programming languages through the open Bluetooth application programming interface (API).

### Usage:

The robot 12 can be thought of as a robotic Bluetooth accessory. This allows the device to be very easy to use and takes advantage of the communication and computing power of modern consumer electronic devices 38. Most of the complex processing can be done on powerful processors within the smartphone, tablet, or personal computer used to control the robot 12. Apps on these devices 38 can send commands (or strings of commands) to the robot 12 through a custom Bluetooth API 37. The robot 12 then interprets these commands, updating its sensors 28, 30 and actuators 20, 22 and sending data back to the external device 38 via the Bluetooth API 37.

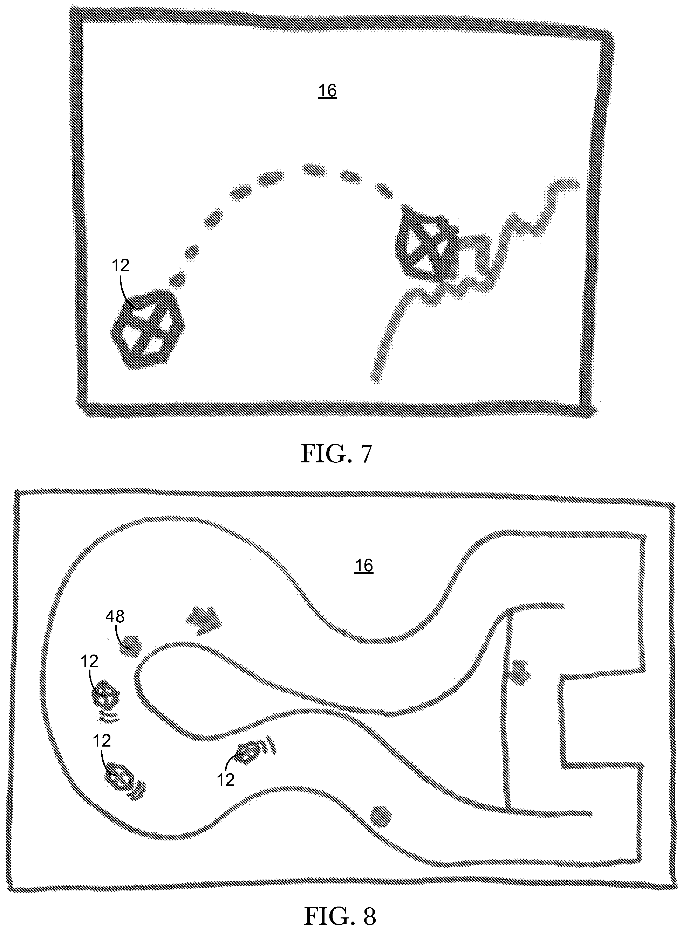

As an example, one can create a driving app (as shown in FIG. 8) for a tablet computer (*e.g.,* an iPad from Apple, Inc.) that uses the tablet's accelerometer and gyroscope for steering. When the app is run on the computing device 38, communication between the computing device 38 and a desired robot 12 is established. The app then uses the iPad's sensors 28 and user input to determine proper wheel speeds and simply sends these desired wheel speeds to the robot 12 to implement by setting corresponding motor speeds.

### Interactions/Behaviors:

The robot design, described herein, enables a variety of interesting and unique interactions. Provided below are a few example concepts that have been generated during the development process.

### Connection:

For a user to connect to the robot 12 via an external computing device 38, the robot 12 is powered on (and awoken from sleep mode). The connection can then be made via a variety of ways, including the following:
- broadcasting a unique name or ID associated with the hardware that can be selected (or changed) by the user;
- lights 34 on the robot 12 lighting up in a particular (or random) color and the user choosing to connect to the robot 12 with the matching color in the app;
- touching a button or shaking the robot 12 to make the robot transmit its connection information;
- "bumping" the robot 12 and tablet 38 (or other controlling device) together, thereby connecting the two devices based on their having strong accelerations around the same time.

### Programming:

Because the robot communicates over an open Bluetooth 4.0 LE or other interface 37, the robot 12 can support a variety of programming languages 42. These languages 42 include visual programming languages (such as Scratch or Blockly) or text-based languages (such as Python, Java, or C). Libraries in different programming languages can be used to send commands or strings of commands over Bluetooth to the robot. Most of the commands can be interpreted by the robot 12 as they are received, but some features can be implemented directly in firmware (for example, stopping the motor 20 when a stall is detected). The robot 12 can also run scripts sent to and stored on the robot 12. In this way, it can be run without needing the Bluetooth master present. The programming environment may also include a simulator for the robot 12 to visualize expected behaviors before running the program on the hardware.

### Feedback:

Much of the feedback from the robot 12 can be presented directly on the external device 38 that controls the robot 12 (since the external device 38 will typically be in communication with the robot 12). One can also use onboard lights 34 and sounds as indicators. The following are some examples by which feedback from can be provided by the robot 12:
- the robot 12 lights up and/or makes a sound when it is turned on;
- the robot 12 lights up and/or makes a sound when it connects to a device 38;
- the robot 12 senses insertion of a marker 14 (or an eraser 15), *e.g.,* by activating a toggle switch by sliding a shaft 24 through the aperture 26, and, if a marker 14 is inserted, lights up with a color matching that of the marker 15 (*e.g.,* the shaft can include features, *e.g.*, that are physically or optically detectable by the robot 12 and that are indicative of the marker color);
- the lights 34 of the robot 12 glow the color that the marker 22 is drawing (when the marker is displaced against the drive surface 16 to leave a marking 17);
- the lights 34 of the robot glow a color that uniquely identifies itself (different robots light up in different colors);
- the lights 34 illuminate to match colors sensed under the robot 12 by the photodetectors 28 (providing a transparency effect);
- a light 44 on the robot 12 indicates the state of the robot 12.

### Activities:

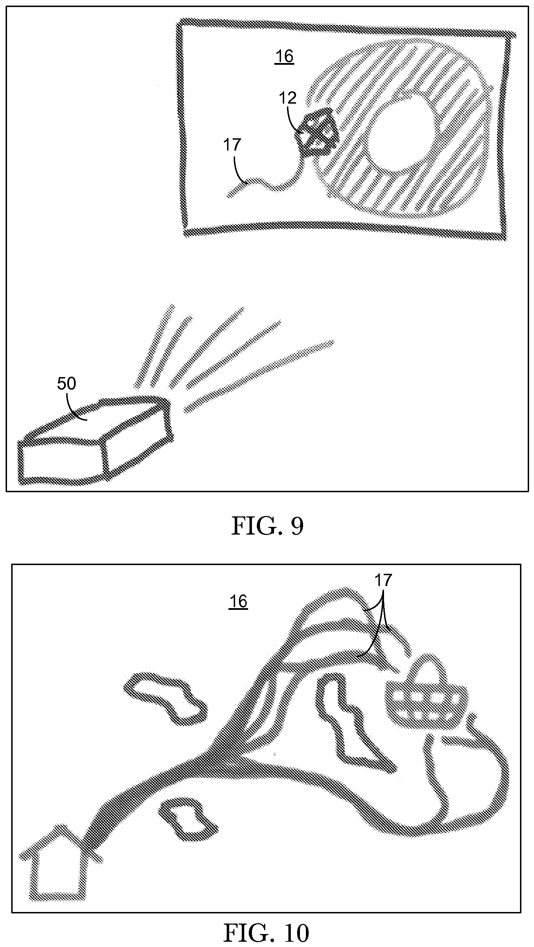

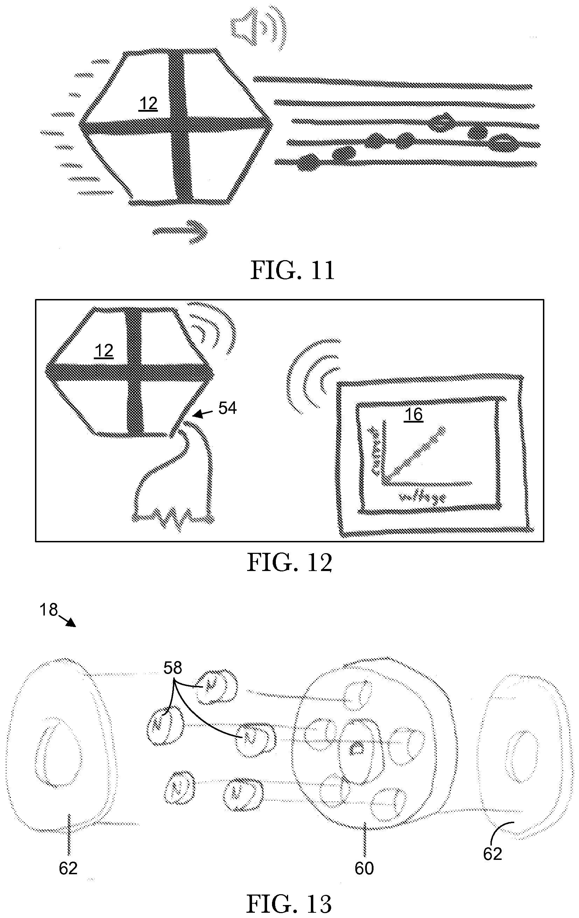

The following are some example activities or challenges that can be performed with the robot 12:
- programming the robot to dance by drawing colors on the board and using the robot 12 to scan in the color pattern drawn on the board 16, as shown in FIG. 6-students do not even need a tablet or computer to program behavior;
- using the robot 12 to simulate projectile motions (as shown via the dashed line in FIG. 7), where users can change the launching power, mass of the projectile, or gravity;
- playing a game where the robots 12 race (controlled, *e.g.,* by iPad sensors) on a hand-drawn course, and where the robots 12 can be affected by "power-ups" 48 drawn on the surface 16, as shown in FIG. 8;
- the robot 12 sensing information projected on the whiteboard 16 by a projector 50, as shown in FIG. 9, wherein the information can be treated as nonerasable information or (using a camera or other tracker) can change based on the robot's location and actions;
- robotic "ant" foraging with multiple robots and markings 17 from the robots 12 functioning as pheromone trails, as shown in FIG. 10;
- robot 12 scanning musical notes, as shown in FIG. 11, and playing the corresponding song;
- using the hacker port 54 to enable other scientific experiments, which can be projected on a display 16 via wireless communication from the robot 12, as shown in FIG. 12;
- exploring and mapping environments;
- scanning what is drawn on a surface;
- optimal cleaning algorithms (for cleaning the whiteboard with the eraser); and
- playing a "snake" or "Tron-like" game.

In particular, the robot 12 can use an array of color sensors 28 on the top and/or bottom of the robot 12 to detect color patterns 46 on the vertical surface 16 and/or projected onto the robot 12 and actuating the actuator 22 (to apply or remove the marker 14 or eraser 15 to/from the underlying surface 16) in response to and as a function of the measurements from the color sensor 28. This capability facilitates a wide variety of interactive activities involving color markings 17 on a whiteboard 16.

### Lessons:

In order to ease adoption in the classroom and provide tangible learning goals, the robot 12 is designed to facilitate lessons based on state and national standards.

For example, in science, the robot 12 can be used to facilitate lessons based on color and additive light; pitch/tone; forces; magnets; gravity; position, velocity, and acceleration; measurement; biological systems; and the scientific method.

In technology, the robot 12 can be used to facilitate lessons based on sensors; programming (functions, recursion, debugging, *etc*.); motors; computers; circuits; and voltage and current.

In engineering, the robot 12 can be used to facilitate lessons based on control; feedback; robotics; communication systems; the engineering process; and problems solving challenges.

In math, the robot 12 can be used to facilitate lessons based on geometry and shapes; variables; units; averaging; fractions; filters; and logic.

### Technology:

### Microcontroller:

The robot 12 uses a microcontroller 56 (shown in FIG. 4) for managing sensors and actuators and for executing higher-level functions. The microcontroller 56 includes input/output peripherals; memory that nontransitorally stores computer-executable software code for, *e.g.,* displacing the robot and actuator in response to and as a function of measurement from the sensors; and a processor in communication with the memory and the input/output peripherals. The microcontroller 56 communicates with a Bluetooth wireless module 37 to receive commands or scripts sent from an external controller 38, such as a smartphone, tablet, or computer using a custom API. The API allows external programs to read and write sensor and actuator settings and data. Firmware can be updated on the device through a specialized connector and/or through the Bluetooth connection 37. The microcontroller processor also receives data received from the sensors 28, 30 and issues commands that are communicated to, *e.g.,* the motors 20 driving the wheels and the actuators 22 that actuate the marker 14 or eraser 15.

### Wireless Connection:

Users can connect with the robot 12 on a smartphone, tablet, or personal computer using a Bluetooth 4.0 low-energy connection 37. This technology is built into many modern devices but can also be added through a USB stick or other accessory. The technology is optimized for simple, low-energy communications, allowing the hardware to be cheap and allowing the communication protocol to be relatively simple. Users can search for nearby robots 12 and connect to one (or multiple devices). Note that a single robot 12 typically only connects to a single controlling device 38 at a time. Once connected, the controlling device 38 can send commands or scripts for the robot to execute. As an examplary interface, one can use a touch-based visual programming language 42 that runs on an iPad or other tablet computing device 38 to control the robot 12.

### Magnetic Wheels:

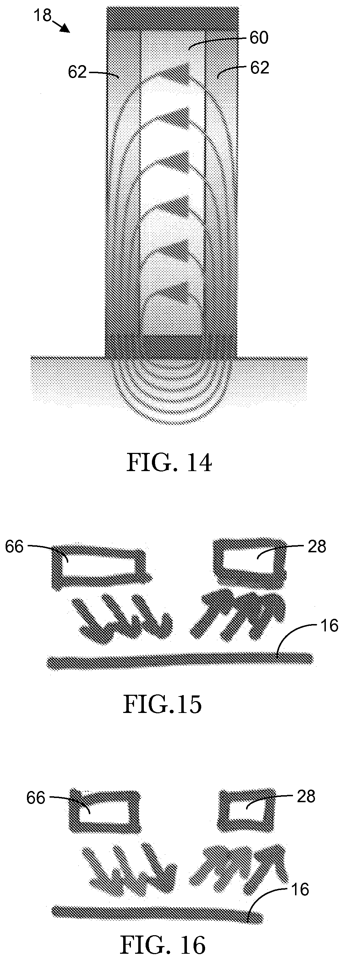

The robot 12 is able to attach to ferromagnetic surfaces 16, such as whiteboards, with two custom magnetic wheels 18, as shown in FIGS. 13 and 14. Permanent magnets 58, such as neodymium rare-earth magnets, are held in place in a low-cost and easy-to-manufacture plastic hub 60 with apertures 61 for containing the magnets 58. Metal plates 62 are placed on both sides of the wheel and are magnetically held in place by the magnets 58. These metal plates 62 guide the magnetic field lines to form a magnetic circuit (through the wheels and driving surface) that causes strong attachment at the wheels 18, as shown in FIG. 14. The number and position of the magnets 58 can be adjusted to change the attractive force. The wheel can also include a tire about the perimeter of the plastic hub 60 for improved traction. The tire can be made of a compressive material (*e.g,* a non-slip polymer) that improves traction and avoids scratching the drive surface 16. Changing the thickness of the tire also changes the attractive force of the magnetic wheels 18.

The wheels 18 can be used on whiteboards, blackboards, other ferromagnetic surfaces, or on flat and horizontal non-magnetic surfaces. The wheels are powered by two electric motors 20 with sufficient torque to drive the robot 12 vertically. These motors 20 can also include gearing to optimize speed/power consumption and encoders for precisely estimating location and speed.

### Slippage Sensing and Mitigation:

One of the problems inherent with driving on vertical surfaces is accounting for gravity. In particular, the robot's tires may slip or stretch causing the robot to move in unintended ways. This corruption can manifest itself as downward drift or unintended rotation (when a single wheel 18 slips more than the other). The robot 12 may include a variety of features to help mitigate this slippage. Examples of these features include weight reduction, adhesion strengthening, and feedback from the environment.

Adhesion strengthening can take several forms, such as the following:
- increasing the number or size of magnets 58;
- using stronger magnets 58;
- optimizing the magnetic circuit;
- adjusting the tire material, shape, and/or hardness;
- cleaning the drive surface 16 before the tire makes contact, thereby preventing dust and dirt buildup on the tire; and
- tire cleaning mechanisms.

Active methods for slippage mitigation use environmental information to account for differences between desired and observed motion of the robot 12. Some strategies include:
- building a model of the expected slippage under various environmental conditions, such as the robot's orientation relative to gravity; the robot 12 adjusts its motion to compensate for an estimated amount and direction of drift;
- measuring relative motion between the robot 12 and drive surface 16 using sensors on the robot 12; these sensors may be optical (such as the optic flow sensors found in computer mice) or mechanical (such as ball casters with sensors to measure speed and direction of the ball, similar to a trackball, which is kept in contact with the drive surface 16); these sensors track the robot motion directly, allowing closed-loop speed control and measurement of motion perpendicular the wheel direction; slippage perpendicular to the drive wheels 18 is compensated for via a navigation and path planning system; the robot 12 can use more of these sensors to help filter the information and better estimate its true motion;
- tracking of the robot 12 using external sensors; sensors external to the robot 12, such as a camera or other calibrated tracking system, can be used to determine the position, direction, and motion of the robot 12 on the drive surface 16; this information can be returned to the robot controller 38 so that the motion planning can be updated to account for measured slipping; advantageously, a camera may also be used to determine the precise position of the robot 12 in the environment (*e.g.,* for navigation tasks) and to estimate the size of the objects in the environment (*e.g.,* using the robot as an object of known size);
- tracking of landmarks on the drive surface 16 by the robot 12; these landmarks may be inherent to the drive surface 16 *(e.g.,* changes in color) or added by the user *(e.g.,* a dot pattern added to the surface 16); known landmarks, when seen by the robot 12, can be used to update the robot's position estimation in its environment using simultaneous localization and mapping (SLAM) techniques; and
- using beacons around the environment that the robot 12 can detect to triangulate its position; the beacons may use light and/or sound and can be active or passive; using directional and/or signal strength information, the robot 12 determines its position on the driving environment and accounts for discrepancies between the desired and measured positions.

### Color Sensing:

The robot 12 can sense colors 46 on the drive surface 16 using an array of photodetectors 28. These sensors 28 (or similar sensors) can also be used to detect a "cliff' or edge of the drive surface 16. The photodetectors 28 can use a light source 66 *(e.g.,* a LED) and a color or grayscale sensor 28, as shown in FIGS. 15, 16, and 23. In particular embodiments, the sensors 28 detect colors by using either a white light source and color filters or colored light sources (such as red, green, and blue LEDs) and an unfiltered (or IR-filtered) sensor. By measuring how the light changes when it is reflected from the surface 16, the color can be determined. For example, a green mark on the surface 16 would absorb more red and blue light while reflecting more green light. The sensors 28 can be calibrated to associate incoming light to a perceived color. The marker inks may also be adjusted to help the robot distinguish between different markers (*e.g.,* by making a special light green ink absorb significantly more infrared light than a dark green marker).

As shown in FIGS. 15 and 16, the array of photodetectors 28 can be placed close to the detecting surface or can use optics to guide the light to the sensor 28. The sensor 28, itself, can be made of discrete components or from a pre-assembled array of photosensitive units (such as an imaging chip). The array can be in the form of a line, a box, or any other shape (such as a V-shape in one prototype).

In one embodiment, a linear camera 68 is used with a screen 70 that defines a slit 71 (like a pinhole camera) or lens. Controlled light 72 of a known color is reflected off of the drive surface 16 (non-controlled light sources should be blocked). Some of the reflected light rays 74 pass through a small slit 71 (or other optics) and reach a part of the photosensitive array 28 based on where they originated on the surface. The distance between the slit 71 and camera 68 (or other optics) determines the area that will be measured. This provides a simple and compact way to scan in the surface. Note that reflected the light 74 can travel through air or another transparent medium (such as glass or acrylic) to reach the slit 71 and camera 68.

Another interesting use of these types of sensors 28 is to use them to reprogram the robot 12. One can use an external light source *(e.g.,* a projector, a monitor, *etc*.) and use different color combinations to communicate with the robot 12. For example, the robot 12 can be placed on a computer tablet screen. An app on the computer tablet then displays a series of multicolored barcodes corresponding to particular hex values. This string of hex values forms the program to be run on the robot 12.

### Actuated Marker:

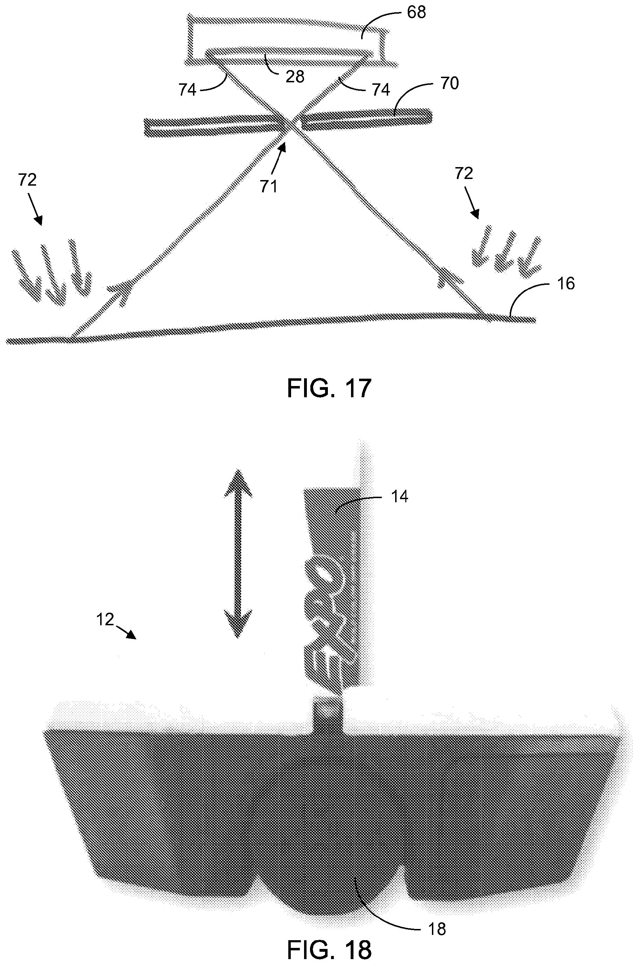

To manipulate the driving surface and to enable a variety of new interactions, the robots 18 are provided with an actuated marker 14, as shown in FIG. 18. The marker 14 is located at the robot's center of rotation so that, if the robot 12 turns in place (*e.g.,* if the two wheels 28, which are equally and oppositely spaced from the center point of the aperture/marker, are spun at equal rotation rates in opposite directions), it turns about the tip of the marker 14 and only leaves a dot. The aperture 26 for the marker 14 and associated features can have the following attributes:
- located at the center of rotation;
- fits a standard whiteboard (*e.g.,* EXPO) marker and may be size-adjustable for other markers;
- can identify when a marker 14 or eraser 15 is present and can identify the color;
- can sense when the marker 14 is drawing;
- can be force controlled (*e.g.,* an eraser 15 can be applied with more force than a marker 14);
- can have multiple locking states (*e.g.,* marker up and down); and
- a spring or other mechanism can provide a constant and known contact force.

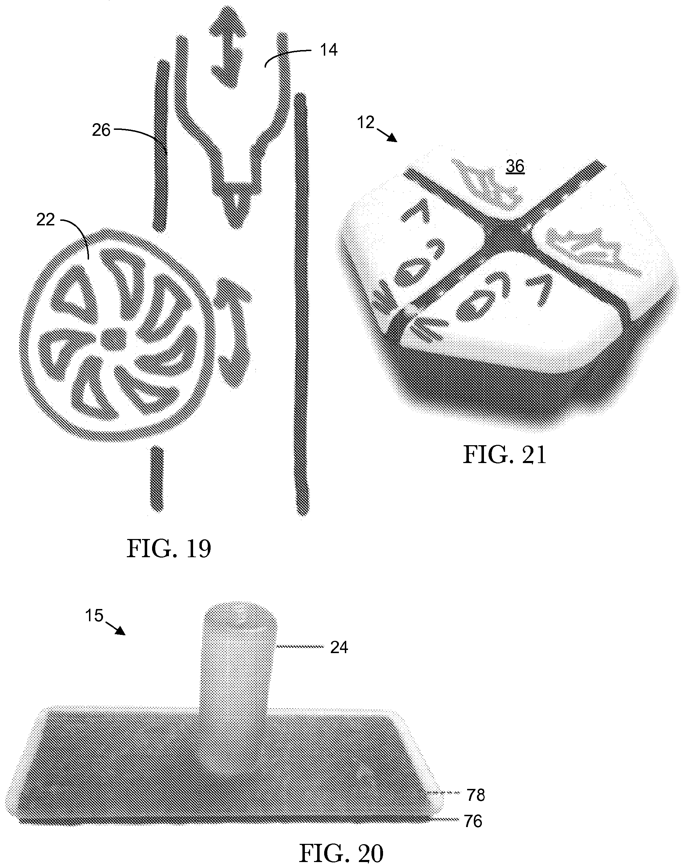

One implementation of the actuator 22 uses a compressible roller, as shown in FIG. 19, to apply pressure and grip the marker 14 to move it. Other embodiments can include mechanisms with two or more steady states (*e.g.,* marker 14 lifted/down or different contact forces) that require little or no energy to maintain. The actuator 22 can also wind a spring or other device to adjust the force when drawing or erasing.

### Eraser Accessory:

The robot 12 can include a specialized eraser accessory 15 that the robot 12 can actuate in the same way as it does a regular marker. The eraser accessory 15 can include a pad 76 of erasing material (*e.g.,* felt) connected to a marker-sized shaft 24. This shaft 24 can be inserted into contact with the marker actuator mechanism 22 in order to selectively apply force and erase a dry-erase surface 16.

Embodiments of the eraser 15 can include the following:
- a layer of compressive foam material 78 connected to the erasing material 76 to ensure even pressure and a controlled contact force;
- a modified shaft shape for improved grip by the robot 12 and/or to prevent rotation (*e.g.,* a D-shaped shaft or a shaft with ribs);
- textured surfaces to improve connection with the robot;
- additional shafts for alignment and/or additional force;
- a rack and pinion-like mechanism; and
- springs in the shaft 24 to control the force applied.

### Customizable Case:

The top surface 36 of the robot 12 can be a magnetic and/or dry-erase whiteboard surface so that children can customize the robot 12, as shown in FIG. 21. This customization is particularly advantageous for younger users who are often more motivated by challenges involving characters and personalized interactions. The top surface 36 of the case can support ink from standard dry erase markers and small magnetic attachments. Potential magnetic attachments include the following:
- magnetic covers with different designs;
- magnetic accessories that allow building with LEGO-compatible bricks;
- attachments for additional motors; and
- additional sensors or breakout boards.

Note that the top surface 36 of the case is provided with a non-conductive area through which wireless signals can pass. In additional embodiments of the case, the tope surface 36 of the case acts as a large button actuator. This actuation via the case can be mechanical or by sensing changes in capacitance.

### Hacker Port:

The robot 12 can have several power and I/O pins 54 available to the user that can also be controlled over Bluetooth communication to allow users to add their own sensors and/or actuators, thereby enabling the platform to be expanded upon and even used as a mobile platform for other scientific experiments.

### Batteries:

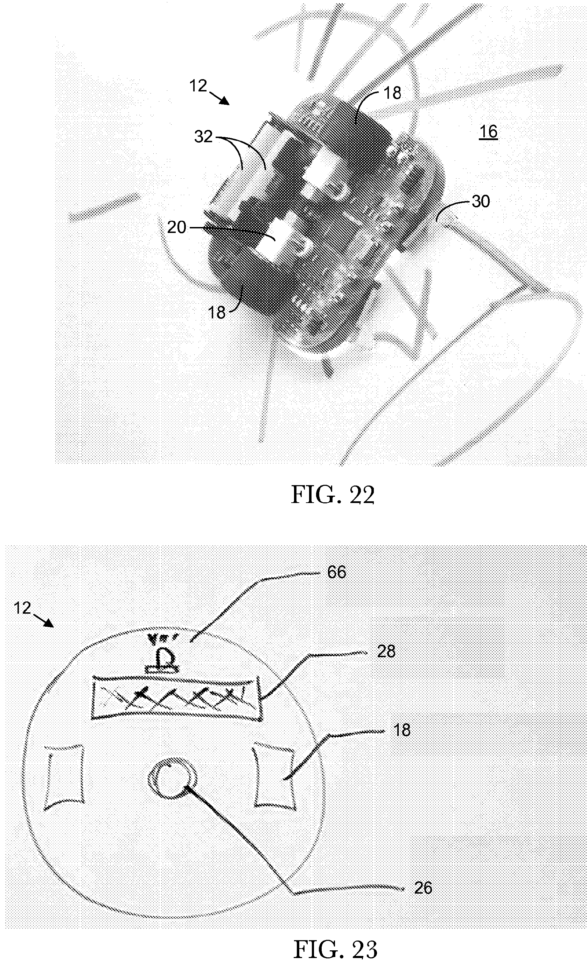

The robot can be powered by batteries 32, as shown in FIG. 22, which can be based on most common battery chemistries. The design also supports specialized battery packs that can be easily swapped out (and even based on different battery technologies from one another).

### Classroom Use and Scannable Textbooks:

To ease adoption of lessons into classrooms, a system-level embodiment can be deployed, where traditional textbooks have scan-able codes printed in the textbook (*e.g.,* QR Codes) that acts as a trigger to inform the robot what type of demo or lesson to give. For instance, a teacher/student scans a code for a physics trajectory problem (as shown in FIG. 7); a smart device (external controller 38) identifies the scan, loads the instructions for that scan from an external offline or online database; and the controller 38 transfers the lesson program to the robot. The robot 12 can then draw the learning material on the whiteboard and creates its own interactive demo for students specific to the scan. Teachers can utilize robot interaction demos by just scanning a text book, making the barrier to robot demos very simple. A practical example can also be in math where the robot plots graph solution on the board.

### External Event-Action Control:

In another embodiment, drag-and-drop-based programs are used that are triggered by linking 'events' and 'actions'. An 'event-action' relationship creates a 'rule'. Rules are ordered and can be reordered to allow the robot 12 to know which rules take priority. Rules with the same priority number can be run in parallel together. A collection of a plurality of rules becomes a 'behavior'. A 'behavior' can be saved and re-loaded back into the programming environment as an 'action'. For example, a 'behavior' wherein a robot 12 is made to follow a line on the drive surface 16 can be an 'action' that is triggered by an 'event' *(e.g.,* a smart phone serving as an external controller 38 is shaken back and forth). Furthermore, this embodiment demonstrates that events are not just limited to the sensors on the robot, they can include events from the external controller 38 (screen touch, microphone input, accelerometer info, camera image capture, timing functions, or any other sensing modality). These programs can be stored as software code on a computer-readable medium and executed by a computer processor in the controller 38; the actions generated by the processor upon executing the code can then be transmitted via a wireless transmitter in the controller 38 to a wireless receiver in the robot 12 for execution.

## Claims

1. A color- or grayscale-sensing, magnetic, mobile, marking robot (12), comprising:
a robot body including a top surface (36) and a bottom surface and the robot body defining a retainer;
a magnet in or coupled with the robot body;
at least two wheels (18) coupled with the robot body and extending from the bottom surface of the body, allowing the robot to climb and be displaced across a vertically oriented surface (16) of a magnetic structure with the wheels in contact with the vertically oriented surface, wherein the retainer is centered between the wheels;
an actuator (22) configured to reciprocally displace a shaft (24) in the retainer, wherein,
(a) the shaft takes the form of a marker (14) including a marking tip, wherein the retainer is an aperture defined by the robot body and through which the shaft is reciprocated, wherein the shaft fits in the aperture of the robot body and is actuatable by the actuator to reciprocally place the marking tip in contact with the vertically oriented surface and remove the marking tip from contact with the vertically oriented surface, or
(b) the shaft includes or is coupled with an eraser (15), wherein the shaft fits in the retainer of the robot body and is actuatable by the actuator to reciprocally place the eraser in contact with the vertically oriented surface and remove the eraser from contact with the vertically oriented surface;
an array of color or grayscale sensors (28) on at least one of the top surface and the bottom surface and configured to detect color or grayscale patterns as the robot is displaced across the vertically oriented surface; and
a computing device in communication with the sensors, the actuator, and the wheels, wherein the computing device includes a processor and computer-readable memory in communication with the processor, wherein the computer-readable memory includes non-transitory program code for at least one of the following actions:
a) displacing the robot; and
b) actuating the actuator in response to and as a function of measurements from the sensors.

2. The color- or grayscale-sensing, magnetic, mobile, marking robot of claim 1, wherein magnets (58) are included in the wheels.

3. The color- or grayscale-sensing, magnetic, mobile, marking robot of claim 1, wherein the color or grayscale sensors are mounted on the bottom surface of the robot body, the marking robot optionally further comprising a light (44) mounted on the bottom surface of the robot body and configured to generate light that reflects off of the vertically oriented surface and is recorded by the sensors.

4. The color- or grayscale-sensing, magnetic, mobile, marking robot of claim 1, wherein the sensors are mounted on the top surface of the robot body.

5. The color- or grayscale-sensing, magnetic, mobile, marking robot of claim 1, wherein the computer-readable memory includes program code both for displacing the robot and for actuating the actuator in response to and as a function of measurements from the sensors.

6. The color- or grayscale-sensing, magnetic, mobile, marking robot of any preceding claims, wherein the shaft takes the form of a marker, and wherein the marker is a dry-erase marker.

7. A method for interactive marking by a mobile robot (12) on a vertical surface (16), the mobile robot including a sensor (28) and an actuator (22) configured to reciprocally displace a shaft (24), wherein (a) the shaft takes the form of a marker (14) including a marking tip, wherein the retainer is an aperture defined by the robot body and through which the shaft is reciprocated, wherein the shaft fits in the aperture of the robot body and is actuatable by the actuator to reciprocally place the marking tip in contact with the vertically oriented surface and remove the marking tip from contact with the vertically oriented surface or (b) the shaft includes or is coupled with an eraser (15), where the shaft fits in the retainer of the robot body and is actuatable by the actuator to reciprocally place the eraser in contact with the vertical surface and remove the eraser from contact with the vertical surface, the method comprising:
displacing the mobile robot across the vertical surface;
detecting features on, in or behind the vertical surface with the sensor; and
controlling displacement of the mobile robot and actuation of the actuator in response to the detection of the features.

8. The method of claim 7, wherein the detection of features is performed by optically detecting color or gray-scale features on the vertical surface, the method optionally further comprising activating light-emitting elements on or in the robot in a color matching a color detected on the vertical surface by the robot, the method optionally further comprising activating the light-emitting elements in a color matching a detected color of the marker.

9. The method of claim 7, wherein the shaft includes or is coupled with the eraser, and
wherein the eraser is mounted in the robot, the method further comprising displacing the robot across the vertical surface with the eraser erasing markings made by the marker on the vertical surface.

10. The method of claim 7, further comprising controlling displacement of the robot and actuation of the shaft using an external controller (38) that is not physically coupled with the robot.

11. The method of claim 7, wherein the robot is adhered to the vertical surface via magnets (58), optionally wherein the vertical surface is a whiteboard (16).

12. The method of claim 7, wherein the mobile robot includes wheels (18) in contact with the vertical surface, and wherein the mobile robot is displaced on the vertical surface by rotating the wheels, the method further comprising:
detecting slippage of at least one of the wheels on the vertical surface; and
adjusting displacement of the robot to compensate for the slippage.

13. The method of claim 7, further comprising scanning a code from a book with an external controller and communicating commands to the mobile robot for execution in response to the scanned code.

14. The method of any of claims 7 - 13, wherein the shaft takes the form of a marker, wherein the marker is a dry-erase marker.

## Patentansprüche

1. Farb- oder graustufenerfassender, magnetischer, mobiler Markierungsroboter (12), Folgendes umfassend:
einen Roboterkörper, der eine Oberseite (36) und eine Unterseite umfasst, wobei der Roboterkörper einen Halter definiert,
einen Magneten in oder gekoppelt mit dem Roboterkörper,
mindestens zwei Räder (18), die mit dem Roboterkörper gekoppelt sind und sich von der Unterseite des Körpers erstrecken und es dem Roboter gestatten, eine vertikal ausgerichtete Fläche (16) einer Magnetstruktur zu erklimmen und über diese verlagert zu werden, wobei die zwei Räder in Kontakt mit der vertikal ausgerichteten Fläche stehen, wobei der Halter zwischen den Rädern vermittelt ist,
ein Betätigungselement (22), das dafür gestaltet ist, eine Welle (24) in dem Halter wechselseitig zu bewegen, wobei:
(a) die Welle die Form eines Markers (14) einnimmt, der eine Markierungsspitze beinhaltet, wobei der Halter eine Öffnung ist, die durch den Roboterkörper definiert ist und durch welche die Welle wechselseitig bewegt wird, wobei die Welle in die Öffnung des Roboterkörpers passt und von dem Betätigungselement betätigt werden kann, um die Markierungsspitze wechselseitig in Kontakt mit der vertikal ausgerichteten Fläche zu platzieren oder die Markierungsspitze aus dem Kontakt mit der vertikal ausgerichteten Fläche zu entfernen, oder
(b) die Welle eine Löscheinrichtung (15) beinhaltet oder mit dieser gekoppelt ist, wobei die Welle in den Halter des Roboterkörpers passt und von dem Betätigungselement betätigt werden kann, um die Löscheinrichtung wechselseitig in Kontakt mit der vertikal ausgerichteten Fläche zu platzieren oder die Löscheinrichtung aus dem Kontakt mit der vertikal ausgerichteten Fläche zu entfernen,
eine Anordnung von Farb- oder Graustufensensoren (28) an der Oberseite und/oder der Unterseite und dafür gestaltet, Farb- oder Graustufenmuster zu erkennen, während der Roboter auf der vertikal ausgerichteten Fläche verlagert wird, und
ein Rechengerät in Verbindung mit den Sensoren, dem Betätigungselement und den Rädern, wobei das Rechengerät einen Prozessor und einen computerlesbaren Speicher in Verbindung mit dem Prozessor umfasst, wobei der computerlesbare Speicher nicht-flüchtigen Programmcode für mindestens einen der folgenden Vorgänge beinhaltet:
a) Verlagern des Roboters und
b) Betätigen des Betätigungselements in Reaktion auf und als eine Funktion von Messungen von den Sensoren.

2. Farb- oder graustufenerfassender, magnetischer, mobiler Markierungsroboter nach Anspruch 1, wobei in den Rädern Magnete (58) enthalten sind.

3. Farb- oder graustufenerfassender, magnetischer, mobiler Markierungsroboter nach Anspruch 1, wobei die Farb- oder Graustufensensoren an der Unterseite des Roboterkörpers montiert sind, wobei der Markierungsroboter optional ferner eine Leuchte (44) umfasst, die an der Unterseite des Roboterkörpers montiert und dafür gestaltet ist, Licht zu erzeugen, das von der vertikal ausgerichteten Fläche reflektiert und von den Sensoren aufgezeichnet wird.

4. Farb- oder graustufenerfassender, magnetischer, mobiler Markierungsroboter nach Anspruch 1, wobei die Sensoren an die Oberseite des Roboterkörpers montiert sind.

5. Farb- oder graustufenerfassender, magnetischer, mobiler Markierungsroboter nach Anspruch 1, wobei der computerlesbare Speicher Programmcode für sowohl das Verlagern des Roboters als auch für das Betätigen des Betätigungselements in Reaktion auf und als eine Funktion von Messungen von den Sensoren beinhaltet.

6. Farb- oder graustufenerfassender, magnetischer, mobiler Markierungsroboter nach einem der vorhergehenden Ansprüche, wobei die Welle die Form eines Markers einnimmt und wobei der Marker ein Trockenlöschmarker ist.

7. Verfahren zum interaktiven Markieren durch einen mobilen Roboter (12) auf einer vertikalen Oberfläche (16), wobei der mobile Roboter einen Sensor (28) und ein Betätigungselement (22) beinhaltet, das dafür gestaltet ist, eine Welle (24) wechselseitig zu verlagern, wobei (a) die Welle die Form eines Markers (14) einnimmt, der eine Markierungsspitze beinhaltet, wobei der Halter eine Öffnung ist, die durch den Roboterkörper definiert ist und durch welche die Welle wechselseitig bewegt wird, wobei die Welle in die Öffnung des Roboterkörpers passt und von dem Betätigungselement betätigt werden kann, um die Markierungsspitze wechselseitig in Kontakt mit der vertikal ausgerichteten Fläche zu platzieren und die Markierungsspitze aus dem Kontakt mit der vertikal ausgerichteten Fläche zu entfernen, oder (b) die Welle eine Löscheinrichtung (15) beinhaltet oder mit dieser gekoppelt ist, wobei die Welle in den Halter des Roboterkörpers passt und von dem Betätigungselement betätigt werden kann, um die Löscheinrichtung wechselseitig in Kontakt mit der vertikal ausgerichteten Fläche zu platzieren oder die Löscheinrichtung aus dem Kontakt mit der vertikal ausgerichteten Fläche zu entfernen, wobei das Verfahren Folgendes umfasst:
Verlagern des mobilen Roboters über die vertikale Fläche,
Erkennen von Merkmalen auf, in oder hinter der vertikalen Fläche mit dem Sensor und
Steuern der Verlagerung des mobilen Roboters und Betätigen des Betätigungselements in Reaktion auf das Erkennen der Merkmale.

8. Verfahren nach Anspruch 7, wobei das Erkennen von Merkmalen durch optionales Erkennen von Farb- oder Graustufenmerkmalen auf der vertikalen Fläche ausgeführt wird, wobei das Verfahren optional ferner das Aktivieren lichtemittierender Elemente an oder in dem Roboter in einer Farbe umfasst, die mit einer Farbe übereinstimmt, die auf der vertikalen Fläche durch den Roboter erkannt wird, wobei das Verfahren optional ferner das Aktivieren der lichtemittierenden Elemente in einer Farbe umfasst, die mit einer erkannten Farbe des Markers übereinstimmt.

9. Verfahren nach Anspruch 7, wobei die Welle die Löscheinrichtung beinhaltet oder mit dieser gekoppelt ist und wobei die Löscheinrichtung in dem Roboter montiert ist, wobei das Verfahren ferner das Verlagern des Roboters über die vertikale Fläche umfasst, wobei die Löscheinrichtung Markierungen löscht, die von dem Marker auf der vertikalen Fläche vorgenommen wurden.

10. Verfahren nach Anspruch 7, ferner das Steuern der Verlagerung des Roboters und das Betätigen der Welle mit Hilfe einer externen Steuerung (38) umfassend, die nicht physisch mit dem Roboter gekoppelt ist.

11. Verfahren nach Anspruch 7, wobei der Roboter mittels Magneten (58) an der vertikalen Fläche haftet, wobei die vertikale Fläche optional ein Whiteboard (16) ist.

12. Verfahren nach Anspruch 7, wobei der mobile Roboter Räder (18) in Kontakt mit der vertikalen Fläche beinhaltet und wobei der mobile Roboter auf der vertikalen Fläche durch Drehen der Räder verlagert wird, wobei das Verfahren ferner Folgendes umfasst:
Erkennen eines Schlupfs mindestens eines der Räder auf der vertikalen Fläche und
Justieren der Verlagerung des Roboters, um den Schlupf zu kompensieren.

13. Verfahren nach Anspruch 7, ferner das Einlesen eines Codes von einem Buch mit einer externen Steuerung und das Übertragen von Befehlen an den Roboter zum Ausführen in Reaktion auf den eingelesenen Code umfassend.

14. Verfahren nach einem der Ansprüche 7 bis 13, wobei die Welle die Form eines Markers einnimmt, wobei der Marker ein Trockenlöschmarker ist.

## Revendications

1. Robot de marquage mobile magnétique à détection de couleur ou de niveaux de gris (12), comprenant :
un corps de robot comprenant une surface supérieure (36) et une surface inférieure et le corps de robot définissant un dispositif de retenue ;
un aimant dans ou couplé au corps de robot ;
au moins deux roues (18) couplées au corps de robot et s'étendant depuis la surface inférieure du corps, permettant au robot de grimper et de se déplacer sur une surface orientée verticalement (16) d'une structure magnétique, les roues étant en contact avec la surface orientée verticalement, dans lequel le dispositif de retenue est centré entre les roues ;
un actionneur (22) conçu pour déplacer en va-et-vient un arbre (24) dans le dispositif de retenue, dans lequel
(a) l'arbre prend la forme d'un marqueur (14) comprenant une pointe de marquage, dans lequel le dispositif de retenue est une ouverture définie par le corps de robot et par laquelle l'arbre se déplace en va-et-vient, dans lequel l'arbre s'ajuste dans l'ouverture du corps de robot et peut être actionné par l'actionneur pour placer en va-et-vient la pointe de marquage en contact avec la surface orientée verticalement et retirer la pointe de marquage du contact avec la surface orientée verticalement, ou
(b) l'arbre comprend ou est couplé avec un effaceur (15), dans lequel l'arbre s'ajuste dans le dispositif de retenue du corps de robot et peut être actionné par l'actionneur pour placer en va-et-vient l'effaceur en contact avec la surface orientée verticalement et retirer l'effaceur du contact avec la surface orientée verticalement ;
un réseau de capteurs de couleur ou de niveaux de gris (28) sur au moins l'une de la surface supérieure et de la surface inférieure et conçus pour détecter des motifs de couleur ou de niveaux de gris lorsque le robot est déplacé sur la surface orientée verticalement ; et
un dispositif informatique en communication avec les capteurs, l'actionneur et les roues, dans lequel le dispositif informatique comprend un processeur et une mémoire lisible par ordinateur en communication avec le processeur, dans lequel la mémoire lisible par ordinateur comprend un code de programme non transitoire pour au moins l'une des actions suivantes :
a) le déplacement du robot ; et
b) l'actionnement de l'actionneur en réponse à et en fonction des mesures des capteurs.

2. Robot de marquage mobile magnétique à détection de couleur ou de niveaux de gris selon la revendication 1, dans lequel des aimants (58) sont inclus dans les roues.

3. Robot de marquage mobile magnétique à détection de couleur ou de niveaux de gris selon la revendication 1, dans lequel les capteurs de couleur ou de niveaux de gris sont montés sur la surface inférieure du corps de robot, le robot de marquage comprenant en outre facultativement une lumière (44) montée sur la surface inférieure du corps de robot et conçue pour générer une lumière qui se réfléchit depuis la surface orientée verticalement et est enregistrée par les capteurs.

4. Robot de marquage mobile magnétique à détection de couleur ou de niveaux de gris selon la revendication 1, dans lequel les capteurs sont montés sur la surface supérieure du corps de robot.

5. Robot de marquage mobile magnétique à détection de couleur ou de niveaux de gris selon la revendication 1, dans lequel la mémoire lisible par ordinateur comprend un code de programme à la fois pour déplacer le robot et pour actionner l'actionneur en réponse à et en fonction des mesures des capteurs.

6. Robot de marquage mobile magnétique à détection de couleur ou de niveaux de gris selon l'une quelconque des revendications précédentes, dans lequel l'arbre prend la forme d'un marqueur, et dans lequel le marqueur est un marqueur pour tableau blanc.

7. Procédé de marquage interactif par un robot mobile (12) sur une surface verticale (16), le robot mobile comprenant un capteur (28) et un actionneur (22) conçus pour déplacer en va-et-vient un arbre (24), dans lequel (a) l'arbre prend la forme d'un marqueur (14) comprenant une pointe de marquage, dans lequel le dispositif de retenue est une ouverture définie par le corps de robot et par laquelle l'arbre se déplace en va-et-vient, dans lequel l'arbre s'ajuste dans l'ouverture du corps de robot et peut être actionné par l'actionneur pour placer en va-et-vient la pointe de marquage en contact avec la surface orientée verticalement et retirer la pointe de marquage du contact avec la surface orientée verticalement ou (b) l'arbre comprend ou est couplé avec un effaceur (15), dans lequel l'arbre s'ajuste dans le dispositif de retenue du corps de robot et peut être actionné par l'actionneur pour placer en va-et-vient l'effaceur en contact avec la surface orientée verticalement et retirer l'effaceur du contact avec la surface orientée verticalement, le procédé comprenant :
le déplacement du robot mobile sur la surface verticale ;
la détection de caractéristiques sur, dans ou derrière la surface verticale au moyen du capteur ; et
le contrôle du déplacement du robot mobile et l'actionnement de l'actionneur en réponse à la détection des caractéristiques.

8. Procédé selon la revendication 7, dans lequel la détection des caractéristiques est exécutée par la détection optique de caractéristiques de couleur ou de niveaux de gris sur la surface verticale, le procédé comprenant en outre facultativement l'activation d'éléments électroluminescents sur ou dans le robot dans une couleur correspondant à une couleur détectée sur la surface verticale par le robot, le procédé comprenant en outre facultativement l'activation des éléments électroluminescents dans une couleur correspondant à une couleur détectée du marqueur.

9. Procédé selon la revendication 7, dans lequel l'arbre comprend ou est couplé à l'effaceur, et dans lequel l'effaceur est monté dans le robot, le procédé comprenant en outre le déplacement du robot sur la surface verticale, l'effaceur effaçant des marques faites par le marqueur sur la surface verticale.

10. Procédé selon la revendication 7, comprenant en outre le contrôle du déplacement du robot et l'actionnement de l'arbre au moyen d'un contrôleur externe (38) qui n'est pas physiquement couplé au robot.

11. Procédé selon la revendication 7, dans lequel le robot adhère à la surface verticale par le biais d'aimants (58), dans lequel facultativement la surface verticale est un tableau blanc (16).

12. Procédé selon la revendication 7, dans lequel le robot mobile comprend des roues (18) en contact avec la surface verticale, et dans lequel le robot mobile est déplacé sur la surface verticale par la rotation des roues, le procédé comprenant en outre :
la détection d'un glissement d'au moins l'une des roues sur la surface verticale ; et
le réglage du déplacement du robot pour compenser le glissement.

13. Procédé selon la revendication 7, comprenant en outre le balayage d'un code depuis un livre au moyen d'un contrôleur externe et la communication de commandes au robot mobile à exécuter en réponse au code balayé.

14. Procédé selon l'une quelconque des revendications 7 à 13, dans lequel l'arbre prend la forme d'un marqueur, dans lequel le marqueur est un marqueur pour tableau blanc.
